# EUROPÄISCHE PATENTSCHRIFT

(11) **EP 1 619 432 B1**
(45) Veröffentlichungstag und Bekanntmachung des Hinweises auf die Patenterteilung: **21.02.2007**
(21) Anmeldenummer: 05015938.3
(22) Anmeldetag: 22.07.2005
(51) Int. Cl.: F16K 27/04, F16K 11/078, E03C 1/04

(54) **Wasserhahn**
Faucet
Robinet

(30) Priorität: 22.07.2004 DE 102004035644
(43) Veröffentlichungstag der Anmeldung: 25.01.2006
(73) Patentinhaber: COMET-Pumpen Systemtechnik GmbH & Co. KG, 37308 Pfaffschwende (DE)
(72) Erfinder: Bachmann, Peter, 37269 Eschwege (DE); Henning, Karl-Heinz, 37308 Pfaffschwende (DE); Kaufhold, Michael, 37308 Pfaffschwende (DE)
(74) Vertreter: Lins, Edgar

(56) Entgegenhaltungen:
- US-A- 4 942 902
- US-A- 5 365 978
- US-A- 5 368 071
- US-A- 5 634 220
- US-A- 5 755 262
- US-A1- 2003 140 413
- US-A1- 2004 187 261
- PATENT ABSTRACTS OF JAPAN Bd. 2003, Nr. 12, 5. Dezember 2003 (2003-12-05) & JP 2004 232253 A (MYM CORP), 19. August 2004 (2004-08-19)
- PATENT ABSTRACTS OF JAPAN Bd. 1997, Nr. 03, 31. März 1997 (1997-03-31) & JP 08 302771 A (INAX CORP), 19. November 1996 (1996-11-19)

## Beschreibung

Die Erfindung betrifft einen Wasserhahn zum Einbau in eine in einer Montageplatte befindlichen Montageöffnung, mit einem Gehäuse, das ein in Einbaustellung oberhalb der Montageplatte befindliches Gehäuseteil und einen durch die Montageplatte hindurchragenden Befestigungsstutzen aufweist, durch den wenigstens eine Zuführungsleitung hindurchgeführt ist, mit einem in das Gehäuseteil eingesetzten Steuerzylinder zum Steuern einer zu einem Auslauf geführten Wassermenge und ggf. zum Mischen von über die Zuführungsleitungen zugeführten Wasserströmen und mit einem einen Betätigungshebel aufweisenden Deckelteil, das mit einem Betätigungselement des Steuerzylinders verbindbar ist, enthaltend ferner eine axial zum Gehäuseteil geführte und mit dem Gehäuseteil verbundene Klemmbuchse, die zur Ausübung einer axialen Vorspannung auf den Steuerzylinder mittels einer Drehbewegung ausgebildet ist und mit einem radial erstreckten Flanschabschnitt an dem Gehäuseteil anliegt.

Die Erfindung betrifft insbesondere einen Wasserhahn, der in einen Wohnwagen, ein Wohnmobil, ein Wohnboot o. dgl. eingebaut werden soll. Die Erfindung betrifft somit insbesondere einen aus Kunststoff hergestellten Wasserhahn.

Wasserhähne der genannten Art sind insbesondere als Einhebel-Mischbatterien beispielsweise durch DE 34 16 282 C2 bekannt. Ihnen wird warmes und kaltes Wasser über die Zuführungsleitungen zugeführt. Durch Kippen des Betätigungshebels des Deckelteils wird der gemischte Wasserstrom geregelt, während durch Drehung des Deckelteils um eine Hochachse das Mischungsverhältnis zwischen kaltem und warmem Wasser einstellbar ist. In einfacher Ausführungsform sind Wasserhähne nur mit einer Zuleitung ohne Mischfunktion ausgebildet.

Für derartige Wasserhähne mit Mischfunktion sind Steuerzylinder bekannt, die in einer Stirnseite zwei Einlauföffnungen und eine Auslauföffnung aufweisen. Hinter den Einlauföffnungen befindet sich ein Mischorgan mit einer Mischöffnung, die in Abhängigkeit von der Kippstellung eines Betätigungselements des Steuerzylinders mit den Einlauföffnungen kommuniziert, wobei der Überdeckungsanteil mit der einen oder anderen Einlauföffnung durch die Drehung des Betätigungselements um die Hochachse festgelegt wird. Aus der Mischkammer heraus wird das gemischte Wasser in die neben den Einlauföffnungen angeordnete Auslauföffnung des Steuerzylinders zurückgeleitet.

Das Gehäuse eines mit einem derartigen Steuerzylinder arbeitenden Wasserhahns muss somit Zuleitungen und einen Auslauf aufweisen, die mit den entsprechenden stimseitigen Öffnungen des Steuerzylinders kommunizieren können. Der Aufbau eines derartigen Gehäuses gestaltet sich relativ kompliziert und erfolgt regelmäßig mit einem fest am Gehäuse angeordneten Auslaufteil.

Ein Wasserhahn der eingangs erwähnten Art ist der US 200310140413 A1 entnehmbar. Dabei wird in einem zylindrischen Ventilgehäuse eine Mischerkartusche gehalten und mittels einer einschraubbaren Mutter gegen einen ringförmigen Absatz innerhalb des Gehäuses gedrückt, um eine axiale Befestigung zu ermöglichen und eine Abdichtung der Zuläufe der Mischerkartusche gegenüber einem Zwischenbauteil zu ermöglichen, in dem sich Zulaufleitungen befinden. Der Nachteil dieser Konstruktion besteht darin, dass sich die Mutter lockern kann, wodurch die Abdichtung verschlechtert und der Hahn undicht werden kann.

US 5,365,978 offenbart eine Mischventilkonstruktion, die auf der Verwendung aufeinander gleitenden Ventilschreiben beruht, die mit geeigneten Öffnungen versehen sind. Auch dabei können die Ventilscheiben gegeneinander vorgespannt werden, wobei das oben erwähnte Problem ebenfalls auftritt. Der vorliegenden Erfindung liegt daher die Aufgabe zugrunde, einen Wasserhahn der eingangs erwähnten Art so auszubilden, dass er in vereinfachter Weise aufgebaut und mittels einer gegen Lockern gesicherten Klemmeinrichtung sicher im montierten Zustand gehalten werden kann.

Zur Lösung dieser Aufgabe ist ein Wasserhahn der eingangs erwähnten Art erfindungsgemäß dadurch gekennzeichnet, dass die Klemmbuchse im montierten Zustand über wenigstens eine Durchtrittsöffnung des Flanschabschnitts mittels eines Bolzens mit dem Gehäuseteil drehfest verbunden ist.

Der erfindungsgemäße Aufbau des Wasserhahns löst das Problem der sicheren und abgedichteten Befestigung des Steuerzylinders in dem Gehäuse dadurch, dass eine Klemmbuchse vorgesehen ist, die axial relativ zu dem Gehäuseteil verstellbar ist, sodass mit der Klemmbuchse eine axiale Vorspannung auf den Steuerzylinder mittels einer Drehbewegung ausgeübt werden kann. Zur Vermeidung eines Lösens der Vorspannung durch eine ungewollte Rückdrehung der Klemmbuchse ist diese mit einem radial erstreckten Flanschabschnitt versehen, der an dem Gehäuseteil anliegt und über wenigstens eine Durchtrittsöffnung des Flanschabschnitts mit dem Gehäuse drehfest verbindbar ist, indem ein Bolzen, beispielsweise das Gewindeteil einer Schraube, durch die Durchtrittsöffnung hindurchragt, wobei vorzugsweise das Gehäuseteil eine entsprechende Aufnahmeöffnung aufweist.

In einer besonders bevorzugten Ausführungsform der Erfindung ist das Gehäuseteil mit einem äußeren Zylinder und einer in den äußeren Zylinder lösbar, aber axial und drehfest gesichert eingesetzte Steuerbuchse, die den Steuerzylinder trägt, aufgebaut, wobei vorzugsweise der äußere Zylinder einstückig mit dem Befestigungsstutzen ausgebildet ist. Diese Ausbildung hat den Vorteil, dass der äußere Zylinder mit dem Befestigungsstutzen in der Montgeplatte befestigbar ist und dass alle Funktionsteile des Wasserhahns aus dem äußeren Zylinder entnehmbar bzw. einsetzbar sind, ohne dass ein Ausbau des äußeren Zylinders mit dem Befestigungsstutzen aus der Montageplatte erfolgen müsste, wie dies bisher der Fall ist.

Bevorzugt weist der äußere Zylinder eine Zylinderachse auf, die mit einer Mittelachse des Befestigungsstutzen einen Winkel < 180° bildet. Auf diese Weise kann mit dem in die Montageplatte eingebauten Adapterteil, bestehend aus äu-ßerem Zylinder und Befestigungsstutzen eine Schrägstellung des Wasserhahns realisiert werden. Die Schrägstellung gegenüber einer Senkrechten zur Montageplatte beträgt vorzugsweise zwischen 5 und 10°, sodass der Winkel zwischen der Zylinderachse des äußeren Zylinders und der Mittelachse des Befestigungsstutzens vorzugsweise zwischen 170° und 175° liegt.

Die lösbare Verbindung zwischen dem äußeren Zylinder und der Steuerbuchse kann beispielsweise durch eine Verschraubung erfolgen. Bevorzugt ist jedoch die Verbindung mit einer Bajonett-Führungsnut, in der ein Vorsprung geführt wird. Vorzugsweise ist die Bajonett-Führungsnut in der Innenwandung des äußeren Zylinders ausgebildet.

Um eine drehfeste Verbindung zwischen dem äußeren Zylinder und der Steuerbuchse herzustellen, können in die Mantelwandungen wenigstens jeweils eine Durchgangsbohrung eingebracht sein, sodass die Drehverriegelung mittels eines Bolzens möglich ist, wen die Durchgangsbohrungen miteinander fluchten. Vorzugsweise sind jeweils zwei Durchgangsbohrungen vorgesehen. Der Bolzen kann dabei als Einschnappteil einstückig mit einem an die Außenwandung des äußeren Zylinders angepassten Anlagestücksausgebildet sein. Das Anlagestück kann dabei eine Markenbezeichnung des Wasserhahns tragen, mit einer Markierung für die Verstellrichtung warm/kalt, insbesondere durch eine übliche blau/rote Farbgebung, versehen sein oder in anderer Weise genutzt werden.

Die Zuführungsleitungen, die durch den Befestigungsstutzen geführt werden, sind vorzugsweise an in der Steuerbuchse ausgebildeten Leitungsstücken anschließbar. Im Zusammenwirken mit einem Steuerzylinder der oben beschriebenen Art fluchtet ein Leitungsstück der Steuerbuchse mit einer zugehörigen Einlauföffnung des Steuerzylinders. Zur Herstellung eines abgedichteten Übergangs sind zwischen den Leitungsstücken und den Einlauföffnungen jeweils eine umgebende Dichtung, beispielsweise in Form eines O-Rings, vorgesehen die die von der Klemmbuchse ausgeübte Vorspannung aufnehmen.

Besonders bevorzugt ist eine Ausführungsform, bei der eine axiale Ausgangsöffnung des Steuerzylinders mit einem Ausgangs-Leitungsstück der Steuerbuchse fluchtet, das in einen nach radial außen offenen Ringraum mündet. Dabei ist die Steuerbuchse im Bereich des Ringraums nach radial außen vorzugsweise von einem zylindrischen Auslaufteil mit einem Auslaufrohr umgeben und sind axial beidseitig vom Ringraum Dichtungen zwischen der Steuerbuchse und dem Auslaufteil eingesetzt. Auf diese Weise gelingt es, das Auslaufteil drehbar an der Steuerbuchse zu lagern. Die Realisierung einer drehbaren Steuerbuchse gelingt somit auch bei einem gegenüber der Montageplatte schräg gestellten Gehäuseteil.

Das vorzugsweise drehbar gelagerte Auslaufteil kann in einfacher Weise axial von dem äußeren Zylinder einerseits und der Klemmbuchse andererseits begrenzt sein. Dabei ist es bevorzugt, dass das zylindrische Außenteil, der äußere Zylinder und die Klemmbuchse miteinander fluchtende Außenwandungen aufweist, wodurch sich ein ästhetisch einwandfreies Erscheinungsbild des erfindungsgemäßen Wasserhahns ergibt.

Die die axiale Vorspannung erzeugende Verbindung zwischen Klemmbuchse und Steuerbuchse kann durch ein Gewinde, aber auch durch eine Bajonettverbindung realisiert sein.

Erhebliche Montagevorteile ergeben sich bei dem erfindungsgemäßen Wasserhahn daraus, dass die Klemmbuchse aus einem Buchsenteil mit radial nach innen ragenden Mitnehmern und einem inneren Ringstück mit nach radial außen zeigenden Stegen gebildet ist und dass das Ringstück einen zylindrischen Ansatz des Steuerzylinders umfasst und mit seinen Stegen die Mitnehmer axial dem Steuerzylinder benachbart untergreift. Die Klemmwirkung wird somit von dem Buchsenteil über die Mitnehmer und die Stege auf das innere Ringstück übertragen, das am Steuerzylinder anliegt und so die Vorspannung auf den Steuerzylinder ausübt. Damit insbesondere bei der Drehbewegung eine Mitnahme der Stege des inneren Ringstücks gesichert ist, können die Stege eine dachartig geformte axiale Oberfläche aufweisen, die mit einer komplementär geformten axialen Oberfläche der Mitnehmer zusammenwirkt.

Aus optischen Gründen ist es zweckmäßig, wenn auf das Klemmteil ein eine kugelabschnittförmige Oberfläche aufweisendes Kalottenteil aufsetzbar ist. Für eine drehfeste Verbindung ist das Kalottenteil mit Innenrippen versehen, die wenigstens einen nach radial innen zeigenden Vorsprung des Klemmteils beidseitig begrenzen. Der nach innen zeigende Vorsprung des Klemmteils kann dabei durch einen der Mitnehmer gebildet sein.

Der Abschluss des Wasserhahns nach oben wird durch das Deckelteil gebildet, das vorzugsweise mit dem Betätigungselement des Steuerzylinders mittels einer in das Betätigungselement eingeschraubten Schraube verbunden ist. Die Schraube kann dabei vorzugsweise in eine Ausnehmung des Deckelteils eingesetzt sein, das mit einem Einsatzstück verschließbar ausgebildet sein kann. Vorzugsweise fluchtet das Einsatzstück mit dem Betätigungshebel und weist zwei durch eine Längsachse des Betätigungshebels getrennte optisch unterschiedliche Bereiche auf, die beispielsweise rot und blau gefärbt sein können, um die Bewegungsrichtung des Betätigungshebels in Richtung "warm" und in Richtung "kalt" zu kennzeichnen.

In einer besonders zweckmäßigen Ausführungsform ist das Einsatzteil zweistückig aus die unterschiedlichen Bereiche ausbildenden Einsatzstücken gebildet, wobei die Einsatzstücke formschlüssig zu dem Einsatzteil zusammensteckbar ausgebildet sein können.

In einer bevorzugten Ausführungsform der Erfindung wird die Formgebung des Betätigungshebels in Form eines auf der Oberfläche des Deckelteils ausgebildeten Wulstes fortgesetzt, sodass das Einsatzteil die Form des Wulstes fortsetzt.

Für die Verwendung des erfindungsgemäßen Wasserhahns im Campingbereich, also für einen Anschluss des Wasserhahns an einen nicht unter Druck stehenden Wasservorrat ist es vorteilhaft, die Betätigung des Wasserhahns mit einem elektrischen Schalter zu verbinden, der beim Öffnen des Wasserhahns eine Pumpe betätigt. Ein derartiger elektrischer Schalter ist bei dem erfindungsgemäßen Wasserhahn vorzugsweise an dem Deckelteil befestigt. Die für den Schalter benötigte elektrische Leitung kann von dem elektrischen Schalter aus durch eine in der Steuerbuchse vorgesehene Durchführung zwischen Steuerbuchse und Steuerzylinder und durch das Befestigungsstück hindurchgeführt werden.

Die Erfindung soll im Folgenden anhand eines in der Zeichnung dargestellten Ausführungsbeispielen näher erläutert werden. Es zeigen:
- Figur 1 -: eine perspektivische Darstellung der für den erfindungsgemäßen Wasserhahn benötigten Einzelteile;
- Figur 2 -: eine Aufreihung der in Figur 1 dargestellten Einzelteile in der Reihenfolge des Zusammenbaus, dargestellt in einer Schnittdarstellung;
- Figur 3 -: eine Schnittdarstellung des zusammengebauten Wasserhahns.

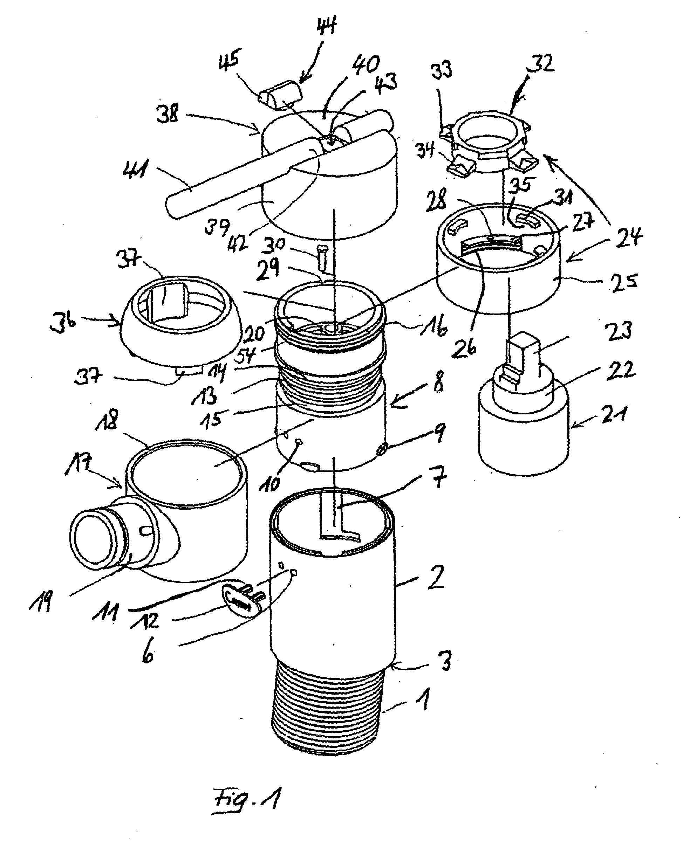

Figur 1 lässt einen Befestigungsstutzen 1 erkennen, der im montierten Zustand durch eine Montageöffnung einer (nicht dargestellten) Montageplatte ragt. Der Befestigungsstutzen weist ein Außengewinde auf, auf das eine Ringmutter aufschraubbar ist und einen durch einen äußeren Zylinder 2 gebildeten Absatz 3 auf die Oberseite der Montageplatte ringförmig um die Montageöffnung herum zieht.

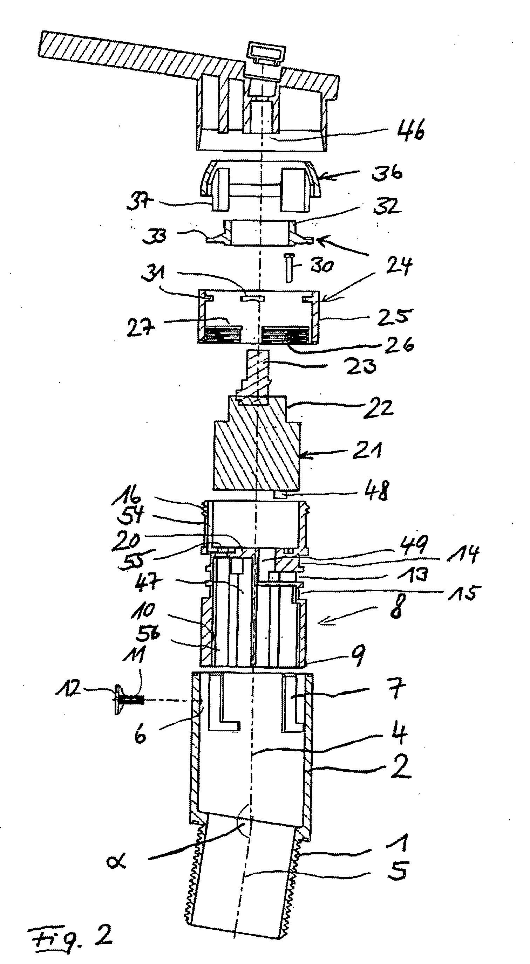

Der Befestigungsstutzen 1 steht winkelig zum äußeren Zylinder 2 derart, dass die Zylinderachse 4 des äußeren Zylinders 2 mit einer Mittenachse 5 des Befestigungsstutzens 1 einen Winkel α bildet, der zwischen 170° und 175° liegt (Figur 2).

In der Mantelwandung des äußeren Zylinders 2 befinden sich zwei Durchgangslöcher 6. In der Innenwandung des äußeren Zylinders 2 sind Bajonett-Führungsnuten 7 ausgebildet, die eine L-Form aufweisen, wobei ein längerer und breiterer axialer Abschnitt in einen in der Umfangswand radial verlaufenden Abschnitt übergeht. Figur 1 lässt erkennen, dass vier derartige Bajonett-Führungsnuten vorgesehen sind, die über den Umfang gleichmäßig verteilt sind, also einen Umfangswinkel von 90° zwischen sich bilden.

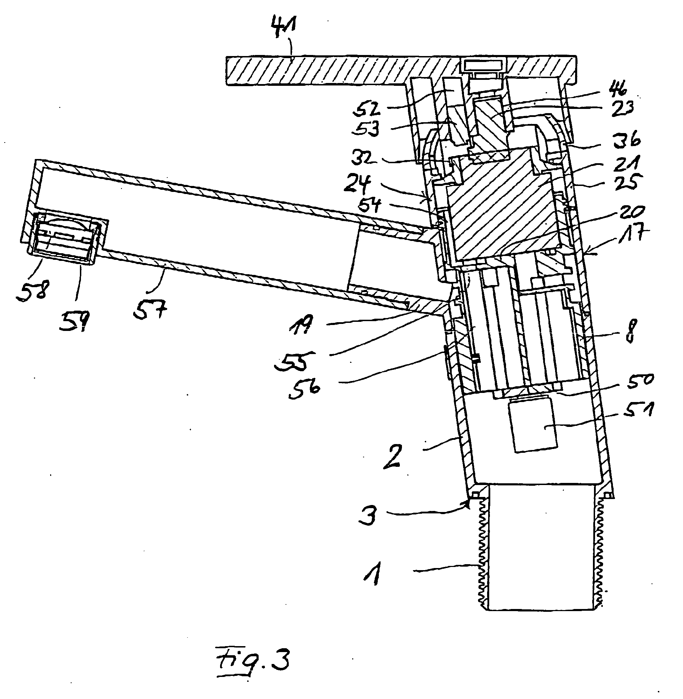

Figur 3 lässt erkennen, dass im montierten Zustand der Befestigungsstutzen 1 senkrecht zu dem Absatz 3, also senkrecht zu der Montageplatte steht und dass somit der äußere Zylinder 2 einen Winkel (180° - α) mit der Senkrechten auf der Montageplatte bildet.

Über die Bajonett-Führungsnuten 7 ist mit dem äußeren Zylinder 2 eine Steuerbuchse 8 verbindbar. Hierzu weist die (ebenso wie der äußere Zylinder 2) einen kreiszylindrischen Querschnitt bildende Steuerbuchse 8 einen Außendurchmesser auf, der dem Innendurchmesser der Wandung des äußeren Zylinders 2 entspricht. Am unteren Ende ist die Steuerbuchse 8 mit vier Vorsprüngen 9 versehen, deren Breite der Breite des axialen Abschnitts der Bajonett-Führungsnut 7 und deren Höhe der Breite des Umfangsabschnitts der Bajonett-Führungsnut 7 entspricht.

In der Mantelwandung der Steuerbuchse 8 befinden sich ebenfalls zwei Durchgangslöcher 10, die so ausgebildet und angeordnet sind, dass sie mit den Durchgangslöchern 6 des äußeren Zylinders 2 fluchten, wenn die Verbindung über die Bajonett-Führungsnuten 7 und die Vorsprünge 9 zwischen Steuerbuchse 8 und äußerem Zylinder 2 hergestellt ist. Durch die miteinander fluchtenden Durchgangslöcher 6, 10 ist ein mit zwei federnden Rastbolzen 11 Anlageteil steckbar, das an die Krümmung der Mantelwandung des äußeren Zylinders 2 angepasst ist und somit sauber an der Mantelwandung anliegen kann, um die Durchgangslöcher 6 zu verdecken. Das Anlageteil ist im dargestellten Ausführungsbeispiel mit einer Marke zur Charakterisierung der Herkunft des Wasserhahns versehen.

Die Außenwandung der Steuerbuchse 8 ist auf etwa mittlere Höhe mit einem nach radial außen offenen umlaufenden Ringraum 13 versehen, zu dem parallel eine obere Ringnut 14 und eine untere Ringnut 15 umläuft. Die Ringnuten 14, 15 dienen der Aufnahme von Ringdichtungen.

Am oberen Ende weist die Steuerbuchse 8 ein Außengewinde 16 auf.

Über die Steuerbuchse 8 ist ein Auslaufteil 17 schiebbar, das aus einem zylindrischen Rohrstück 18 und einem sich an eine Mantelöffnung des zylindrischen Rohrstücks seitlich anschließenden Rohransatz 19 besteht. Das Auslaufteil 17 weist einen Innendurchmesser auf, der dem Außendurchmesser der Steuerbuchse 8 entspricht. Der Außendurchmesser des zylindrischen Rohrstücks 18 entspricht dem Außendurchmesser des äußeren Zylinders 2.

Die Steuerbuchse 8 weist oberhalb des Ringraums 13 einen eingesetzten Boden 20 auf, auf den ein Steuerzylinder 21 aufsetzbar ist. Der Steuerzylinder 21 weist an seiner Oberseite einen abgesetzten zylindrischen Ansatz 22 auf, aus dessen stirnseitigem freien Ende ein rechteckiges Betätigungselement 23 herausragt. Das Betätigungselement 23 ist um eine Hochachse drehbar und um eine horizontale Drehachse schwenkbar.

Der in die Steuerbuchse 8 eingesetzte Steuerzylinder 21 ist mittels einer Klemmbuchse 24 mit axialer Vorspannung gegen den Boden 20 der Steuerbuchse 8 drückbar. Hierzu besteht die Klemmbuchse 24 aus einem zylindrischen Buchsenteil 25, das am unteren Ende mit Innengewindeabschnitten 26 versehen ist, durch die die Klemmbuchse 24 auf das Außengewinde 16 der Steuerbuchse 8 aufschraubbar ist. Oberhalb der Innengewindeabschnitte befinden sich radial nach innen ragende Flanschabschnitte 27 an der Innenwandung des Buchsenteils 25. Einer der Flanschabschnitte 27 ist mit einer Durchgangsöffnung 28 versehen, die im aufgeschraubten Zustand mit einer nach radial außen offenen Nut 29 am oberen Rand der Steuerbuchse 8 fluchtet, sodass ein durch die Durchgangsöffnung 28 hindurch gesteckter Bolzen 30 in die Nut 29 ragt und eine drehfeste Verbindung zwischen Steuerbuchse 8 und Klemmbuchse 24 herstellt.

Am oberen Rand der Innenwandung des Buchsenteils 25 der Klemmbuchse 24 befinden sich vier gleichmäßig über den Umfang verteilte Mitnehmer 31.

Die Klemmbuchse 24 wird vervollständigt durch ein inneres Ringstück 32, dessen Innendurchmesser dem Außendurchmesser des zylindrischen Ansatzes 22 des Steuerzylinders 21 entspricht. Das innere Ringstück 32 weist viel nach radial außen ragende Stege 33 auf, deren Länge bis zu einem Außendurchmesser reicht, der dem Innendurchmesser des Buchsenteils 25 entspricht. Das innere Ringstück 32 ist in das Buchsenteil 25 einsetzbar, und zwar derart, dass die Stege 33 unter den Mitnehmern 31 zu liegen kommen. Im montierten Zustand sollen die Stege 33 genau unter den Mitnehmern 31 liegen. Als Zentrierungshilfe sind die Stege 33 mit einer dachförmigen Oberseite 34 ausgebildet. Dementsprechend weisen die Mitnehmer 31 eine der Dachform 34 entsprechende komplementäre Unterseite 35 auf.

Auf die Klemmbuchse 24 ist ein Kalottenteil 36 aufsteckbar. Hierzu weist das Kalottenteil 36 vier axial nach unten gerichtete Stege 37 auf, deren Außenwände einem Außendurchmesser entsprechen, der dem Innendurchmesser des Buchsenteils 25 der Klemmbuchse 24 entspricht. Wenigstens zwei der Stege 37 bilden einen Zwischenraum, dessen Breite der Breite eines der Stege 33 des Inneren Ringstücks 32 gleicht. Auf diese Weise ist das Kalottenteil 36 drehfest mit der Klemmbuchse 24 verbunden. Das Kalottenteil 36 weist eine kugelabschnittförmige und ringförmige Wandung auf, die somit nach oben hin offen ist.

Der Wasserhahn wird an seiner Oberseite abgedeckt durch ein Deckelteil 38, das durch eine zylindrische Mantelwandung 39 und einer die Mantelwandung 39 abschließenden schrägen Stirnwand 40 sowie durch einen Betätigungshebel 41 gebildet ist. Die schräge der Stirnwand 40 entspricht der Schräge des äußeren Zylinders 2 bezogen auf den Absatz 3 derart, dass das Deckelteil im geschlossenen Zustand des Wasserhahns eine parallel zum Absatz 3 (zur Montageplatte) verlaufende Oberseite und einen entsprechend ausgerichteten Betätigungshebel 41 aufweist, wie dies Figur 3 verdeutlicht.

Der Betätigungshebel 41 ist mit einem kreiszylindrischen Querschnitt ausgebildet und erstreckt sich bis zu der zylindrischen Mantelwandung 39. Auf der Oberseite der Stirnwand 40 setzt sich der Betätigungshebel 41 optisch als halbkreisförmiger Wulst 42 fort.

In dem halbkreisförmigen Wulst 42 befindet sich eine Ausnehmung 43, in die ein Einsatzteil 44 einsetzbar ist. Das Einsatzteil 44 besteht aus zwei Einsatzteilen 45, die zu dem Einsatzstück 44 zusammengesteckt sind und eine der Form des Wulstes 42 entsprechende Oberseite bilden.

Die Ausnehmung 43 dient zur Aufnahme einer (nicht dargestellten) Befestigungsschraube, die in das Betätigungselement 23 des Steuerzylinders 21 einschraubbar ist. Durch Anheben des Betätigungshebels 41 kann somit das Betätigungselement 23 gekippt werden. Hierdurch wird der Volumenstrom des Wasserhahns geregelt.

Das Deckelteil 40 ist im Innenraum mit einer viereckigen, nach unten offenen Kammer 46 versehen, die so ausgebildet ist, dass sie das viereckige Betätigungselement 23 übergreift, wenn die Schraubverbindung zwischen Deckelteil 40 und Betätigungselement 23 des Steuerzylinders 21 hergestellt wird. Auf diese Weise ist der Betätigungshebel 41 drehfest mit dem Betätigungselement 23 verbunden. Durch eine Drehung des Deckelteils 40 aufgrund der Drehung des Betätigungshebels 41 kann somit der Mischvorgang in dem Steuerzylinder 21 eingestellt werden.

Die beiden Einsatzstücke 45 des Einsatzteils 44 sind vorzugsweise optisch unterschiedlich ausgebildet, wobei sinnvollerweise das eine Einsatzstück 45 blau und das andere Einsatzstück rot eingefärbt ist. Da die Einsatzstücke 45 in Längsrichtung des Betätigungshebels 41 geteilt sind, gibt die rote Seite die Drehrichtung des Betätigungshebels für wärmeres Wasser und die blaue Seite die Drehrichtung des Betätigungshebels für kälteres Wasser an.

Figur 2 lässt erkennen, dass die mit Hilfe der Ansätze 9 und der Bajonett-Führungsnuten 7 in den äußeren Zylinder 2 einsetzbare Steuerbuchse 8 Zuführungs-Leitungsstücke 47 ausbildet, die zum Boden 20 führen. Über den Boden 20 findet eine Verbindung zu entsprechenden Einlauföffnungen auf der stimseitigen Unterseite des Steuerzylinders 21 statt. Aus der Unterseite des Steuerzylinders 21 ragen zwei Zentrierbolzen 48 heraus, die mit entsprechenden Zentrierausnehmungen im Boden 20 der Steuerbuchse 8 für einen verdrehsicheren Einsatz des Steuerzylinders 21 in die Steuerbuchse 8 zusammenwirken. Dadurch ist sichergestellt, dass eine Flüssigkeitsverbindung zwischen den zugehörigen Leitungsstücken 47 und entsprechenden Eingangsöffnungen des Steuerzylinders 21 hergestellt wird.

Die Steuerbuchse weist im Boden ein Ausgangs-Leitungsstück 49 auf, das in den mittleren Ringraum 13 einmündet. Die in die den Ringraum 13 oben und unten begrenzenden Ringnuten 14, 15 eingesetzten Ringdichtungen dichten den Ringraum 13 nach oben und unten ab, wenn (wie in Figur 2 nicht dargestellt ist) das Auslaufteil 17 über die Steuerbuchse 8 im Bereich des Ringraums 13 geschoben wird.

Figur 3 verdeutlicht in einer Schnittdarstellung den fertig montierten erfindungsgemäßen Wasserhahn. Demgemäß steht der Befestigungsstutzen 1 in seiner Einbauposition; nämlich senkrecht zu dem Ansatz 3, also senkrecht zur Montageplatte. Der äußere Zylinder 2 ist demgemäß nach vorn (zur Auslaufseite) des Wasserhahns geneigt. An die Unterseite der Steuerbuchse 8 ist eine Anschlussplatte 50 mit zwei Schlauchanschlüssen 51 geschraubt, von denen in Figur 3 wegen der Schnittdarstellung nur einer erkennbar ist.

Figur 3 verdeutlicht, dass das Auslaufteil 17 drehbar auf die Steuerbuchse 8 aufgesetzt ist und nach unten durch den äußeren Zylinder 2 und nach oben durch die Klemmbuchse 24 begrenzt und gehalten ist.

Figur 3 zeigt ferner ergänzend, dass in eine nach unten offene Montagekammer 52 ein elektrischer Schalter 53 eingesetzt ist, dessen (in Figur 3 wegen der Schnittdarstellung nicht zu erkennender) Betätigungsvorsprung auf die Oberseite des Steuerzylinders 21 so weit ragt, dass der Schalter als Ausschalter betätigt ist. Erst wenn der Betätigungshebel 41 nach oben geschwenkt wird, um den Wasserhahn zu öffnen, wird der Stromkreis über den Schalter 53 geschlossen, um eine Wasserpumpe zur Förderung von Wasser aus einem Vorratsbehälter durch den Wasserhahn zu betätigen.

Figur 3 lässt in der Innenwandung der Steuerbuchse 8 im Bereich des Steuerzylinders 21 eine axial nach unten verlaufende Nut 54 erkennen, durch die eine mit dem elektrischen Schalter 53 verbundene Leitung zu einer Durchgangsöffnung 55 im Boden 20 hindurchgeführt wird, um in einem entsprechenden Kanal 56 der Steuerbuchse 8 in den offenen Raum des äußeren Zylinders 2 und des Befestigungsstutzens 1 zur Unterseite der Montageplatte geführt zu werden, wo die elektrische Verbindung mit der Pumpe hergestellt werden kann. Die Ausbildung der Nut 54 ist auch auf der Innenwandung der Steuerbuchse 8 in den Figuren 1 und 2 erkennbar. Figur 2 verdeutlicht, dass die Ausrichtung der Klemmbuchse 24 so erfolgen muss, dass ein Zwischenraum zwischen den Gewindeabschnitten 26 mit der Nut 54 fluchtet, damit die elektrische Leitung durch die Klemmbuchse 24 zur Nut 54 hin verlegbar ist.

Figur 3 zeigt ergänzend noch einen Wasserauslauf 57, der auf dem Rohransatz 19 befestigt ist und eine mit einem Auslaufsieb 58 versehene Auslauföffnung 59 aufweist.

## Patentansprüche

1. Wasserhahn zum Einbau in eine in einer Montageplatte befindlichen Montageöffnung, mit einem Gehäuse, das ein in Einbaustellung oberhalb der Montageplatte befindliches Gehäuseteil und einen durch die Montageplatte hindurchragenden Befestigungsstutzen (1) aufweist, durch den wenigstens eine Zuführungsleitung hindurchgeführt ist, mit einem in das Gehäuseteil eingesetzten Steuerzylinder (21) zum Steuern einer zu einem Auslauf (57) geführten Wassermenge und ggf, zum Mischen von über die Zuführungsleitungen zugeführten Wasserströmen und mit einem einen Betätigungshebel (41) aufweisenden Deckelteil (39), das mit einem Betätigungselement (23) des Steuerzylinders (21) verbindbar ist, enthaltend ferner eine axial zum Gehäuseteil geführte und mit dem Gehäuseteil verbundene Klemmbuchse (24), die zur Ausübung einer axialen Vorspannung auf den Steuerzylinder (21) mittels einer Drehbewegung ausgebildet ist und mit einem radial erstreckten Flanschabschnitt (27) an dem Gehäuseteil anliegt, **dadurch gekennzeichnet, dass** die Klemmbuchse (24) im montierten Zustand über wenigstens eine Durchtrittsöffnung (28) des Flanschabschnitts (27) mittels eines Bolzens (30) mit dem Gehäuseteil drehfest verbunden ist.

2. Wasserhahn nach Anspruch 1, **dadurch gekennzeichnet, dass** der Bolzen (30) durch einen Gewindeabschnitt einer Schraube gebildet ist.

3. Wasserhahn nach Anspruch 1 oder 2, **dadurch gekennzeichnet, dass** das Gehäuseteil mit einem äußeren Zylinder (2) und einer in den äußeren Zylinder (2) lösbar, aber axial und drehfest gesichert eingesetzten Steuerbuchse (8), die den Steuerzylinder (21) trägt, aufgebaut ist.

4. Wasserhahn nach Anspruch 3, **dadurch gekennzeichnet, dass** der äußere Zylinder (2) einstückig mit dem Befestigungsstutzen (1) ausgebildet ist.

5. Wasserhahn nach Anspruch 4, **dadurch gekennzeichnet, dass** der äußere Zylinder (2) eine Zylinderachse (4) aufweist, die mit einer Mittelachse (5) des Befestigungsstutzens (1) einen Winkel α < 180° bildet.

6. Wasserhahn nach Anspruch 5, **dadurch gekennzeichnet, dass** der Winkel α zwischen 170° und 175° liegt.

7. Wasserhahn nach einem der Ansprüche 3 bis 6, **dadurch gekennzeichnet, dass** die Verbindung zwischen dem äußeren Zylinder (2) und der Steuerbuchse (8) mittels wenigstens einem mit einer Bajonett-Führungsnut (7) zusammenwirkenden Vorsprung (9) erfolgt.

8. Wasserhahn nach Anspruch 7, **dadurch gekennzeichnet, dass** die wenigstens eine Bajonett-Führungsnut (7) in der Innenwandung des äußeren Zylinders (2) ausgebildet ist.

9. Wasserhahn nach einem der Ansprüche 3 bis 8, **dadurch gekennzeichnet, dass** zur drehsicheren Verbindung zwischen dem äußeren Zylinder (2) und der Steuerbuchse (8) in den Mantelwandungen wenigstens jeweils eine Durchgangsbohrung (6, 10) eingebracht ist, die in miteinander fluchtender Stellung mittels wenigstens eines eingesetzten Bolzens (11) verriegelbar sind.

10. Wasserhahn nach Anspruch 9, **dadurch gekennzeichnet, dass** der Bolzen (11) als Einschnappteil einstückig mit einem an die Außenwand des äußeren Zylinders (2) angepassten Anlagestücks (12) ausgebildet ist.

11. Wasserhahn nach einem der Ansprüche 3 bis 10, **dadurch gekennzeichnet**, das die Zuführungsleitung an ein in der Steuerbuchse (8) ausgebildetes zugehöriges Leitungsstück (47) anschließbar ist.

12. Wasserhahn nach Anspruch 11, **dadurch gekennzeichnet, dass** Leitungsstücke (47) der Steuerbuchse (8) mit Einlauföffnungen des Steuerzylinders (21) axial fluchten.

13. Wasserhahn nach Anspruch 12, **dadurch gekennzeichnet, dass** zwischen den Leitungsstücken (47) und den Einlauföffnungen jeweils eine umgebende Dichtung vorgesehen ist, die die von der Klemmbuchse (24) ausgeübte Vorspannung aufnimmt.

14. Wasserhahn nach Anspruch 12 oder 13, **dadurch gekennzeichnet, dass** eine axiale Ausgangsöffnung des Steuerzylinders (21) mit einem Ausgangs-Leitungsstück (49) der Steuerbuchse (8) fluchtet, das in einen nach radial außen offenen Ringraum (13) mündet, dass die Steuerbuchse (8) im Bereich des Ringraums (13) nach radial außen von einem zylindrischen Auslaufteil (17) mit einem Auslaufrohr (19) umgeben ist und dass axial beidseitig vom Ringraum (13) Dichtungen zwischen der Steuerbuchse (8) und dem Auslaufteil (17) eingesetzt sind.

15. Wasserhahn nach Anspruch 14, **dadurch gekennzeichnet, dass** das Auslaufteil (17) drehbar an der Steuerbuchse (8) gelagert ist.

16. Wasserhahn nach Anspruch 14 oder 15, **dadurch gekennzeichnet, dass** das Auslaufteil (17) axial von dem äußeren Zylinder (2) einerseits und von der Klemmbuchse (24) andererseits begrenzt ist.

17. Wasserhahn nach Anspruch 16, **dadurch gekennzeichnet, dass** das zylindrische Auslaufteil (17) der äußere Zylinder (2) und die Klemmbuchse (24) miteinander fluchtende Außenwandungen aufweisen,

18. Wasserhahn nach einem der Ansprüche 3 bis 17, **dadurch gekennzeichnet, dass** die Klemmbuchse (24) mit einem Innengewinde (26) auf ein Au-ßengewinde (16) der Steuerbuchse (8) geschraubt ist.

19. Wasserhahn nach einem der Ansprüche 3 bis 17, **gekennzeichnet durch** eine Bajonettverbindung zwischen Klemmbuchse (24) und Steuerbuchse (8).

20. Wasserhahn nach einem der Ansprüche 1 bis 19, **dadurch gekennzeichnet, dass** die Klemmbuchse (24) aus einem Buchsenteil (25) mit radial nach innen ragenden Mitnehmern (31) und einem inneren Ringstück (32) mit nach radial außen zeigenden Stegen (33) gebildet ist und dass das Ringstück (32) einen zylindrischen Ansatz (22) des Steuerzylinders (21) umfasst und mit seinen Stegen (33) die Mitnehmer (31) axial dem Steuerzylinder (21) benachbart untergreift.

21. Wasserhahn nach Anspruch 20, **dadurch gekennzeichnet, dass** die Stege (33) eine dachartig geformte axiale Oberfläche aufweisen, die mit einer komplementär geformten axialen Oberfläche (35) der Mitnehmer (31) zusammenwirkt.

22. Wasserhahn nach einem der Ansprüche 1 bis 21, **dadurch gekennzeichnet, dass** auf die Klemmbuchse (24) ein eine kugelabschnittförmige Oberfläche aufweisendes Kalottenteil (36) aufsetzbar ist, das mit Innenrippen (37) wenigstens eine nach radial innen zeigenden Vorsprung (31) der Klemmbuchse (24) beidseitig begrenzt.

23. Wasserhahn nach Anspruch 22, **dadurch gekennzeichnet, dass** der nach radial innen zeigende Vorsprung durch einen Mitnehmer (31) gebildet ist.

24. Wasserhahn nach einem der Ansprüche 1 bis 23, **dadurch gekennzeichnet, dass** das Deckelteil (38) mit dem Betätigungselement (23) des Steuerzylinders (21) mittels einer in das Betätigungselement (23) eingeschraubten Schraube verbunden ist.

25. Wasserhahn nach Anspruch 24, **dadurch gekennzeichnet, dass** die Schraube in eine Ausnehmung (43) des Deckelteils (38) eingesetzt ist.

26. Wasserhahn nach Anspruch 25, **dadurch gekennzeichnet, dass** die Ausnehmung (43) durch ein Einsatzteil (44) verschließbar ist.

27. Wasserhahn nach Anspruch 26, **dadurch gekennzeichnet, dass** das Einsatzteil (44) mit dem Betätigungshebel (41) fluchtet und zwei durch eine Längsachse des Betätigungshebels (41) getrennte optisch unterscheidbare Bereiche aufweist.

28. Wasserhahn nach Anspruch 27, **dadurch gekennzeichnet, dass** das Einsatzteil (44) zweistückig aus die unterschiedlichen Bereiche ausbildenden Einsatzstücken (45) gebildet ist.

29. Wasserhahn nach Anspruch 28, **dadurch gekennzeichnet, dass** die Einsatzstücke (45) formschlüssig zu dem Einsatzteil (44) zusammensteckbar ausgebildet sind.

30. Wasserhahn nach einem der Ansprüche 27 bis 29, **dadurch gekennzeichnet, dass** die optisch unterschiedlichen Bereiche in roter und blauer Farbe ausgebildet sind.

31. Wasserhahn nach einem der Ansprüche 27 bis 30, **dadurch gekennzeichnet, dass** eine Formgebung des Betätigungshebels (41) in Form eines auf der Oberfläche des Deckelteils (38) ausgebildeten Wulstes (42) fortgesetzt ist und dass das Einsatzteil (44) die Form des Wulstes (42) fortsetzt.

32. Wasserhahn nach einem der Ansprüche 1 bis 31, **dadurch gekennzeichnet, dass** an dem Deckelteil (38) ein elektrischer Schalter (53) zum Anschalten einer Pumpe beim Betätigten des Betätigungshebels (41) in Öffnungsrichtung befestigt ist.

33. Wasserhahn nach Anspruch 32, **dadurch gekennzeichnet, dass** eine elektrische Leitung von dem elektrischen Schalter (53) an der durch eine in der Steuerbuchse (8) vorgesehene Durchführung (54) zwischen Steuerbuchse (8) und Steuerzylinder (21) und durch den Befestigungsstutzen (1) hindurchgeführt ist.

## Claims

1. Water tap for installation in a mounting orifice present in a mounting plate having a housing which exhibits a housing part present in an installation position above the mounting plate and a securing piece (1) projecting through the mounting plate, through which securing piece is passed at least one supply pipe with a control cylinder (21) inserted into the housing part for the purpose of controlling a quantity of water conducted to an outlet (57) and, if appropriate, for the purpose of mixing flows of water supplied via the supply pipes and having a lid part (39) exhibiting an actuating lever (41), which is capable of being connected to an actuating element (23) for the control cylinder (21), and in addition containing a clamping bush (24) guided axially in relation to the housing part and connected to the housing part, which clamping bush is arranged for the purpose of exerting an axial pre-tension on the control cylinder (21) by means of a rotating movement and makes contact with the housing part via a radially extended flange section (27), **characterized in that** the clamping bush (24) in the assembled condition is connected to the housing part in a non-rotating manner by means of a bolt (30) via at least one penetration orifice (28) of the flange section (27).

2. Water tap according to Claim 1, **characterized in that** the bolt (30) is formed by a threaded section of a screw.

3. Water tap according to Claim 1 or 2, **characterized in that** the housing part is constructed with an external cylinder (2) and a control bush (8), which carries the control cylinder (21), inserted removably into the external cylinder (2) but secured axially and in a non-rotating manner.

4. Water tap according to Claim 3, **characterized in that** the external cylinder (2) is embodied integrally with the securing piece (1).

5. Water tap according to Claim 4, **characterized in that** the external cylinder (2) exhibits a cylinder axis (4), which forms an angle α < 180° with a central axis (5) of the securing piece (1).

6. Water tap according to Claim 5, **characterized in that** the angle α lies between 170° and 175°.

7. Water tap according to one of Claims 3 to 6, **characterized in that** the connection between the external cylinder (2) and the control bush (8) is effected by means of at least one projection (9) interacting with a bayonet guide slot (7).

8. Water tap according to Claim 7, **characterized in that** the at least one bayonet guide slot (7) is executed in the inner wall of the external cylinder (2).

9. Water tap according to one of Claims 3 to 8, **characterized in that** at least one through hole (6, 10) is provided in each case to ensure the non-rotating connection between the external cylinder (2) and the control bush (8) in the enclosing walls, which are capable of being locked in a mutually aligned position by means of at least one inserted bolt (11).

10. Water tap according to Claim 9, **characterized in that** the bolt (11) is embodied as a snap-in component in a single piece with a locating piece (12) adapted to the external wall of the external cylinder (2).

11. Water tap according to one of Claims 3 to 10, **characterized in that** the supply pipe is capable of being connected to an associated conduit piece (47) formed in the control bush (8).

12. Water tap according to Claim 11, **characterized in that** conduit pieces (47) in the control bush (8) are in axial alignment with inlet orifices in the control cylinder (21).

13. Water tap according to Claim 12, **characterized in that** a surrounding seal is provided between the conduit pieces (47) and the inlet orifices in each case, which seal absorbs the pre-tension exerted by the clamping bush (24).

14. Water tap according to Claim 12 or 13, **characterized in that** an axial outlet orifice of the control cylinder (21) is in alignment with an outlet conduit piece (49) in the control bush (8), which outlet conduit piece discharges into an annular cavity (13) that is open in a direction radially outwards, **in that** the control bush (8) is surrounded in a direction radially outwards in the vicinity of the annular cavity (13) by a cylindrical outlet piece (17) with an outlet pipe (19), and **in that** seals are inserted axially to either side of the annular cavity (13) between the control bush (8) and the outlet piece (17).

15. Water tap according to Claim 14, **characterized in that** the outlet piece (17) is rotatably mounted on the control bush (8).

16. Water tap according to Claim 14 or 15, **characterized in that** the outlet piece (17) is delimited axially by the external cylinder (2) on the one hand and by the clamping bush (24) on the other hand.

17. Water tap according to Claim 16, **characterized in that** the cylindrical outlet piece (17), the external cylinder (2) and the clamping bush (24) exhibit external walls that are in mutual alignment with one another.

18. Water tap according to one of Claims 3 to 17, **characterized in that** the clamping bush (24) is screwed via an internal thread (26) onto an external thread (16) of the control bush (8).

19. Water tap according to one of Claims 3 to 17, **characterized by** a bayonet connection between the clamping bush (24) and the control bush (8).

20. Water tap according to one of Claims 1 to 19, **characterized in that** the clamping bush (24) consists of a bush part (25) with stops (31) projecting radially inwards and an inner annular piece (32) with webs (33) projecting radially outwards, and **in that** the annular piece (32) comprises a cylindrical shoulder (22) of the control cylinder (21) and engages with its webs (33) beneath the stops (31) axially adjacent to the control cylinder (21).

21. Water tap according to Claim 20, **characterized in that** the webs (33) exhibit an axial surface in a rooflike form, which interacts with a complementary axially formed surface (35) of the stops (31).

22. Water tap according to one of Claims 1 to 21, **characterized in that** a dome-shaped part (36) exhibiting a surface in the form of a segment of a sphere is capable of being placed on the clamping bush (24), which dome-shaped part delimits with internal ribs (37) on both sides at least one projection (31) of the clamping bush (24) facing radially inwards.

23. Water tap according to Claim 22, **characterized in that** the projection facing radially inwards is constituted by a stop (31).

24. Water tap according to one of Claims 1 to 23, **characterized in that** the lid part (38) is connected to the actuating element (23) of the control cylinder (21) by means of a screw screwed into the actuating element (23).

25. Water tap according to Claim 24, **characterized in that** the screw is inserted into a recess (43) in the lid part (38).

26. Water tap according to Claim 25, **characterized in that** the recess (43) is capable of being closed by means of an insert (44).

27. Water tap according to Claim 26, **characterized in that** the insert (44) is in alignment with the actuating lever (41) and exhibits two optically distinct areas that are separated by a longitudinal axis of the actuating lever (41).

28. Water tap according to Claim 27, **characterized in that** the insert (44) is formed in two pieces from inserts (45) forming the different areas.

29. Water tap according to Claim 28, **characterized in that** the inserts (45) are embodied in such a way as to be assembled with the insert (44) with positive engagement.

30. Water tap according to one of Claims 27 to 29, **characterized in that** the optically distinct areas are executed in a red and blue colour.

31. Water tap according to one of Claims 27 to 30, **characterized in that** a design of the actuating lever (41) in the form of a bead (42) executed on the surface of the lid part (38) is continued, and **in that** the insert (44) continues the form of the bead (42).

32. Water tap according to one of Claims 1 to 31, **characterized in that** an electrical switch (53) for the purpose of switching on a pump in conjunction with actuation of the actuating lever (41) in the direction of opening is attached to the lid part (38).

33. Water tap according to Claim 32, **characterized in that** an electrical wire is passed from the electrical switch (53) on the duct (54) provided in the control bush (8) between the control bush (8) and the control cylinder (21) and through the securing piece (1).

## Revendications

1. Robinet d'eau destiné à être monté dans une ouverture de montage d'une plaque de montage, comprenant un corps qui comporte en position de montage une partie de corps située au dessus de la plaque de montage et un embout de fixation (1) traversant la plaque de montage et faisant saillie de celle-ci, à travers lequel est guidée au moins une conduite d'alimentation, avec un boisseau cylindrique de commande (21) pour commander la quantité d'eau conduite vers une sortie (57) et éventuellement pour mélanger les courants d'eau venant des conduites d'alimentation et avec une partie de couverture (39) présentant un levier d'actionnement (41), cette partie de couverture pouvant être reliée à un élément d'actionnement (23) du boisseau cylindrique de commande (21), comprenant en outre une bague de serrage (24) guidée axialement par rapport à la partie de corps et reliée à la partie de corps, cette bague de serrage étant conçue pour exercer par rotation une précontrainte sur le boisseau cylindrique de commande 21 et comportant une section de flasque (27) s'étendant radialement qui repose sur la partie de corps, **caractérisé en ce que** la bague de serrage (24) est en position de montage reliée de façon fixe en rotation à la partie de corps par au moins une ouverture de passage de la section de flasque (27) au moyen d'une broche (30).

2. Robinet d'eau selon la revendication 1, **caractérisé en ce que** la broche (30) est constituée par une section filetée d'une vis.

3. Robinet d'eau selon la revendication 1 ou 2, **caractérisé en ce que** la partie de corps est constitué par un cylindre extérieur (2) et par un manchon de commande (8) inséré de façon amovible, mais bloqué axialement et en rotation dans le cylindre extérieur (2), qui porte le boisseau cylindrique de commande (21).

4. Robinet d'eau selon la revendication 3, **caractérisé en ce que** le cylindre extérieur (2) est réalisé d'une seule pièce avec l'embout de fixation (1).

5. Robinet d'eau selon la revendication 4, **caractérisé en ce que** le cylindre extérieur (2) présente un axe (4) qui forme un angle α < 180° avec l'axe central (5) l'embout de fixation (1).

6. Robinet d'eau selon la revendication 5, **caractérisé en ce que** l'angle α est compris entre 170° et 175°.

7. Robinet d'eau selon l'une des revendications 3 à 6, **caractérisé en ce que** la liaison entre le cylindre extérieur (2) et le manchon de commande (8) est réalisé au moyen d'au moins une saillie (9) coopérant avec une gorge de guidage à baïonnette (7).

8. Robinet d'eau selon la revendication 7, **caractérisé en ce que** ladite au moins une gorge de guidage à baïonnette (7) est réalisée dans la face intérieure de la paroi du cylindre extérieur (2).

9. Robinet d'eau selon la revendication 3 à 8, **caractérisé en ce que** pour assurer le blocage en rotation entre le cylindre extérieur (2) et le manchon de commande (8) il est prévu dans les parois d'enveloppe, au moins pour chacune d'elles un perçage traversant (6, 10) qui est verrouillable par l'insertion d'au moins une broche (11), ce perçage traversant étant disposé dans une position affleurant avec le perçage correspondant.

10. Robinet d'eau selon la revendication 9, **caractérisé en ce que** la broche (11) est réalisée sous forme de partie encliquetable d'une seule pièce avec une partie d'application (12) adaptée à la paroi extérieure du cylindre extérieur (2).

11. Robinet d'eau selon l'une des revendications 3 à 10, **caractérisé en ce que** la conduite d'alimentation peut être raccordée à un embout de conduite (47) réalisé dans le manchon de commande (8) et appartenant à celui-ci.

12. Robinet d'eau selon la revendication 11, **caractérisé en ce que** l'embout de conduite (47) du manchon de commande (8) affleure axialement avec des ouvertures d'entrée du cylindre de commande (21).

13. Robinet d'eau selon la revendication 12, **caractérisé en ce qu'**entre les embouts de conduite (47) et les ouvertures d'entrée est prévu dans chaque cas une étanchéité périphérique qui accepte la précontrainte exercée par la bague de serrage (24).

14. Robinet d'eau selon la revendication 12 ou 13, **caractérisé en ce qu'**une ouverture axiale de sortie du cylindre de commande (21) affleure avec un embout de conduite de sortie (43) du manchon de commande (8) qui débouche dans un espace annulaire (13) ouvert radialement vers l'extérieur, **en ce que** le manchon de commande (8) est dans la région de l'espace annulaire (13) entouré radialement vers l'extérieur par une partie de sortie cylindrique (17) avec un tube de sortie (19) et **en ce que** des étanchéités entre le manchon de commande (8) et la partie de sortie (17) sont insérées axialement de chacun des côtés de l'espace annulaire (13).

15. Robinet d'eau selon la revendication 14, **caractérisé en ce que** la partie de sortie (17) est montée de façon rotative au manchon de commande (8).

16. Robinet d'eau selon la revendication 14 ou 15, **caractérisé en ce que** la partie de sortie (17) est délimitée axialement d'une part par le cylindre extérieur (2) et d'autre part par la bague de serrage (24).

17. Robinet d'eau selon la revendication 16, **caractérisé en ce que** la partie de sortie cylindrique (17) présente une paroi extérieure qui affleure les parois extérieures du cylindre extérieur (2) et de la bague de serrage (24).

18. Robinet d'eau selon l'une des revendications 3 à 17, **caractérisé en ce que** la bague de serrage (24) présente un filetage intérieur (26) qui est vissé sur un filetage extérieur (16) du manchon de commande (8).

19. Robinet d'eau selon l'une des revendications 3 à 17, **caractérisé par** une liaison à baïonnette entre la bague de serrage (24) et le manchon de commande (8).

20. Robinet d'eau selon l'une des revendications 1 à 19 **caractérisé en ce que** la bague de serrage (24) comprend une partie de bague (25) présentant des entraîneurs (31) faisant saillie vers l'intérieur et une partie annulaire intérieure (32) présentant des pattes (33) dirigées radialement vers l'extérieur et **en ce que** la partie annulaire (32) entoure un embout cylindrique (22) du cylindre de commande (21) et par ses pattes (33) vient en prise axialement avec le cylindre de commande (21) au moyen des entraîneurs (31).

21. Robinet d'eau selon la revendication 20, **caractérisé en ce que** les pattes (33) présentent une surface axiale conformée en toit, qui coopère avec une surface axiale (35) conformée de façon complémentaire des entraîneurs (31).

22. Robinet d'eau selon l'une des revendication 1 à 21, **caractérisé en ce que** sur la bague de serrage (24) peut être disposée une partie de calotte (36) ayant une surface extérieure en forme calotte sphérique tronquée qui par des nervures intérieures (37) limite de chaque côté au moins une saillie radiale (31) dirigée vers l'intérieur de la bague de serrage (24).

23. Robinet d'eau selon la revendication 22, **caractérisé en ce que** la saillie radiale dirigée vers l'intérieur est constituée par un entraîneur (31).

24. Robinet d'eau selon l'une des revendications 1 à 23, **caractérisé en ce que** la partie du couvercle (38) est reliée à l'élément d'actionnement (23) du cylindre de commande (21) au moyen d'une vis vissée dans l'élément d'actionnement (23).

25. Robinet d'eau selon la revendication 24, **caractérisé en ce que** la vis est insérée dans un évidement (43) de la partie du couvercle (38).

26. Robinet d'eau selon la revendication 25, **caractérisé en ce que** l'évidement (43) peut être obturé par une pièce d'insertion (44).

27. Robinet d'eau selon la revendication 26, **caractérisé en ce que** la pièce d'insertion (44) affleure avec le levier d'actionnement (41) et présente deux zones optiquement distinctes disposées de part et d'autre d'un axe longitudinal du levier d'actionnement (41).

28. Robinet d'eau selon la revendication 27, **caractérisé en ce que** la pièce d'insertion (44) est réalisée en deux parties constituant des parties d'insertion (45) définissant les zones distinctes.

29. Robinet d'eau selon la revendication 28, **caractérisé en ce que** les parties d'insertion (45) sont réalisées pour être emboîtables par coopération de formes pour réaliser la pièce d'insertion (44).

30. Robinet d'eau selon l'une des revendications 27 à 29, **caractérisé en ce que** les zones optiquement distinctes sont réalisées en couleurs rouge et bleu.

31. Robinet d'eau selon l'une des revendications 27 à 30, **caractérisé en ce que** la forme du levier d'actionnement (41) est prolongée sous la forme d'un bourrelet (42) réalisé sur la surface extérieure de la partie de couvercle (38) et **en ce que** la pièce d'insertion (44) prolonge la forme du bourrelet (42).

32. Robinet d'eau selon l'une des revendications 1 à 31, **caractérisé en ce que** sur la partie de couvercle (38) est fixé un interrupteur électrique (53) pour mettre en route une pompe lors de l'actionnement du levier d'actionnement (41) dans la direction d'ouverture.

33. Robinet d'eau selon la revendication 32, **caractérisé en ce qu'**un conducteur électrique est guidée à partir de l'interrupteur électrique (53) à travers un passage de guidage (54) réalisé dans le manchon de commande (8), entre le manchon de commande (8) et le cylindre de commande (21) et à travers l'embout de fixation (1).
